# EUROPEAN PATENT APPLICATION

(11) **EP 1 122 677 A2**
(43) Date of publication of application: **08.08.2001**
(21) Application number: 01300948.5
(22) Date of filing: 02.02.2001
(51) Int. Cl.: G06F 17/60

(54) **A transaction processing system**

(30) Priority: 03.02.2000 GB 0002499
(71) Applicant: GE Capital Bilfinans AB, 171 29 Solna (SE)
(72) Inventor: Norlin, Klas, 167 44 Bromma (SE); Soderman, Per, 761 42 Norrtalje (SE); Edstrom, Lise-Lott, 186 97 Brottby (SE)
(74) Representative: Goode, Ian Roy

(57) **Abstract**

A transaction processing system (1) allows users to interact using Web browsers (2) with Web servers and Application servers (ASs). The Web servers have connection clients (CC) and resident controller configuration and administrator programs for handling transaction requests. Each connection client (CC) routes a request to a connection processor (CP) in an application server (AS). The connection processor (CP) dynamically generates a HTML page for transmission to the connection client (CC). This is performed with use of data servers (DSs) in the application server. This structure is modular and flexible and handles transaction requests with a good response time.

## Description

### Introduction

The invention relates to a transaction processing system for handling some or all of a transaction such as purchasing a vehicle from a showroom location. The invention relates particularly, but not exclusively, to processing of transactions involving preparation of contracts and/or determining a credit score for a potential customer.

One object of the invention is to reduce the time input for handling a transaction from "contact to contract".

Another object is to provide more flexibility in the level of functionality with respect to time of the day or week.

### Statements of Invention

According to the invention, there is provided a transaction processing system comprising:-
an access server comprising means for interacting with remote user systems, and
an application server connected to the access server and comprising means for retrieving data for a transaction and for directing it to a user system via the access server.

In one embodiment, the access server comprises a plurality of connection clients, each comprising means for handling a transaction request.

In one embodiment, the application server comprises a connection processor comprising means for dynamically generating a transaction report for a user.

In another embodiment, the connection processor comprises means for dynamically generating a HTML page for transmission to a user via the access server. Preferably, the connection processor comprises a Java Virtual Machine™ architecture.

Preferably, there are a plurality of connection processors residing on one or more hardware platforms.

In another embodiment, the application server comprises a data server comprising means for accessing external databases to retrieve data for use in processing a transaction request.

In one embodiment, the data server comprises means for establishing a link with a service manager comprising means for retrieving data from a plurality of external databases.

Preferably, the application server comprises a persistence engine comprising means for maintaining current session data.

In one embodiment, the application server comprises a configuration utility comprising means for setting parameters for maintenance of session data by the persistence engine.

In a further embodiment, the connection processor comprises means for accessing the persistence engine to determine session data upon receipt of a transaction request.

In one embodiment, the application server comprises means for accessing a request broker queue maintained by connection clients of the access server.

Preferably, the data server comprises means for retrieving requests from a request broker queue.

In one embodiment, the application server comprises business functions for retrieving and processing data for users.

In another embodiment, the application server comprises a class architecture comprising a business object layer, pages which represent views to the business object layer, and a controller layer comprising controller and helper objects. Preferably, the business object layer comprises a set of objects instantiated from classes for functions.

Preferably, the page implements a particular Web page and comprises a method to obtain information from the controller layer, a method to send data entered by the user to the controller layer, and a method to implement certain user actions. In one embodiment, the controller layer classes and helper objects co-ordinate execution of user actions and communicate with the business object layer.

In another embodiment, the business object layer classes include an actor class to implement an actor function group or model. Preferably, an actor model allows instantiation of an object to perform one of several roles, and an actor may have multiple location attributes.

In one embodiment, the application server comprises means for allowing access of an external system to an actor and an actor is owned by the system upon which it currently resides.

In further embodiment, the business object classes include an object class for instantiation of objects such as leasing or hire purchase objects.

In one embodiment, the business object layer includes a calculation class for instantiation of calculation functions.

In one embodiment, the business object layer classes includes a credit scoring class for instantiation of a credit scoring function using data retrieved via a data server on the application server.

Preferably, the credit scoring function comprises means for analysing inputted credit-related data, data retrieved frm an internal object database, and payment history data retrieved from an external database.

In one embodiment, the credit scoring function comprises means for analysing calculated data such as purchased item residual value.

In another embodiment, the credit scoring function comprises means for generating an acceptance response, a rejection response, or a response asking for manual approval.

In a further embodiment, the business object layer classes include printing, contract, search, fast registration, general, and maintenance classes.

According to another aspect, the invention provide a transaction processing method carried out by a system comprising an access server and a server, the method comprising the steps of:-
the server automatically accessing a database to determine credit data of a customer applying for a loan, and
the server generating an output indicating approval or rejection of the application.

In one embodiment, the server accesses an external database to determine the credit data.

Preferably, the output is a credit scoring result.

In another embodiment, the result is an acceptance, a rejection, or a manual approval requirement.

### Detailed Description of the Invention

The invention will be more clearly understood from the following description of some embodiments thereof, given by way of example only with reference to the accompanying drawings in which:-
Fig. 1 is a schematic representation of a transaction processing system of the invention; and
Fig. 2 is a diagram illustrating classes of the system.

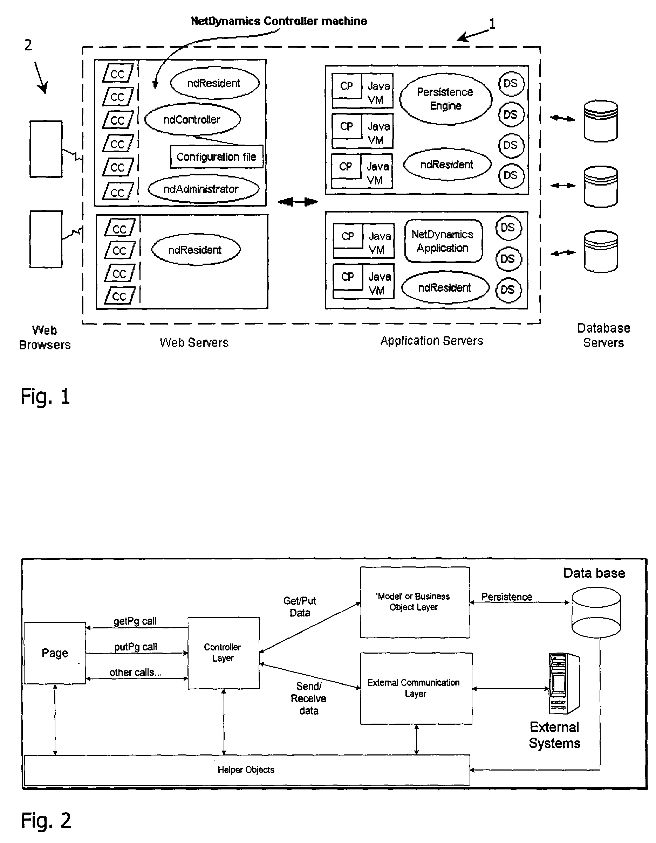

Referring to Fig. 1, a transaction processing system of the invention is indicated by the numeral 1. The diagram illustrates the logical architecture, and the hardware architecture is chosen according to the particular circumstances. This architecture is developed using a tool, NetDynamics™, provided by Sun Microsystems.

Users interact via Web Browsers 2, which provide access to Web Servers having connection clients CC. The Web Servers also comprise resident, controller, configuration, and administrator programs. The Web Servers interact with Application Servers ASs comprising connection processors CPs and data servers DSs. One AS also includes a persistence engine PE.

The system 1 is linked with a service manager via the DSs for access to data required for transactions. The service manager accesses various databases, particularly for credit scoring. These links are TCP/IP sockets.

Each Web Server is responsible for fetching the pages of a NetDynamics™ Project and returning them to the browser. It does this through a CC, which is a CGI program (or NSAPI or ISAPI runtime library). The CC passes the request (i.e. project/page) to an AS (Application Server) for processing. Each (NetDynamics™) AS is responsible for processing a project/page request received from the CC and returning the HTML text making up the page. Page processing may result in one or more database transactions being executed.

The CC is a lightweight CGI utility that receives a NetDynamics™ URL and routes the corresponding project/page request to the Java Connection Processor (CP) object. A CC runs on the web server and is launched when a browser requests a NetDynamics™ URL.

The CC interface can be a lightweight CGI executable or a Netscape server API runtime library or Microsoft ISAPI runtime library for improved performance.

The term connection in the name "connection processor" refers to a request to process a single page in a project. The main purpose of the CP is to dynamically generate the HTML text of a NetDynamics™ page. In addition, the CP makes requests to the Data Server (DS) to execute the necessary database transactions. The CP is a Java Virtual Machine (JVM) process that executes all NetDynamics™ Projects. In other words, the CP executes the code in NetDynamics™ Java API as well as the code in the classes (e.g. event methods). Thus if Java CPs are distributed across multiple Application Servers, each server must have a copy of the projects. A CP is active until the resulting HTML page is sent to the WS (Web Server). The CP is then free to process another request (i.e. connection).

When a connection is requested, the CP checks to see if a user session exists, and if so the session information is fetched from the Persistent Engine (PE) object. Otherwise, a new session is established. If not already cached, the required NetDynamics™ Project and Page Java classes are loaded using the NetDynamics™ Class Loader. The CP then fetches the web variables (CGI name/value pairs and web server environment variables) passed in the connection. Next, the CP executes the Page, and before returning its HTML text to the CC, posts any changes made to the session to the PE. CPs are started by the NetDynamics™ Resident.

Requests from the CC are stored in a shared memory CC Request Broker Queue on the AS that is running the CP. If there are CPs running on multiple machines, there are multiple queues, and the CC routes the request to one of them. There may be multiple CP processes running on a single machine, and all CPs monitor the same CP Request Broker Queue.

Requests for the DS's are stored in a shared memory DS Request Broker Queue on the machine that is running the DS. Once again, if there are DS's running on multiple ASs, then the CP routes the request to one of the queues. There may be multiple DS processes running on a single machine, and all DS's running on that server monitor the same DS Request Broker Queue.

In summary, as described above, when the CP receives a request from a CC Request Broker queue it:
fetches the session from the PE
determines which NetDynamics™ project (.spj file) and page (.spg file) are requested
executes the Java code of the request
initiates a database server request, if needed
generates the page's HTML text
posts session changes to the PE

The Data Servers (DS) handle requests for database access issued by the CP.

A DS connects to multiple databases at a time and maintains these database connections until the NetDynamics™ Application Server is stopped or the DS runs out of open connections and must connect to another database. This persistent connection enhances the application's performance. The maximum number of persistent connections maintained by each DS is configurable through a NetDynamics™ System Configuration utility. After the data request is returned to the CP, the DS is free for the next request in the DS Request Broker.

Regarding the Persistence Engine (PE), this runs on a single AS only. It is responsible for storing all NetDynamics™ session information. The PE manages a pool of shared memory buffers containing each web user's session information indexed by session IDs. The user's login information and privileges are part of the session information that is stored in the PE.

The size of PE can be configured in a NetDynamics™ System Configuration Utility. Since the PE is a fixed size resource, each NetDynamics™ project defines a session timeout value. A session which has not been read or written within the timeout interval is eligible for garbage collection by the PE. Thus, the PE is intended to maintain state for the duration of a user's interaction with a NetDynamics™ application. It is not designed to store persistent data for long periods of time. Since the PE is accessed primarily by the CPs, NetDynamics™ installs and runs the PE on the application server that has the most CPs for maximum efficiency.

For generating reports, Oracle Reports™ is used.

In operation, extranet users (such as car dealers) access the system 1 over the Internet using a Web Browser. The web server listens to browser requests and forwards them to the AS (normal pages) or the Oracle™ Reports Server (PDF reports), depending on the URL. The CC communicates with the AS using a proprietary protocol. The AS processes the request, retrieves data from different data sources, applies business rules and builds a new HTML file (PDF file in the report case) from a template. The HTML is sent back to the browser via the Web Server. At the back-end, the system 1 has its own database (Oracle™), but also communicates with external databases via the service manager.

The system 1 reads data concerning such things as existing cases and interest rates from an external system "Cosmos". It also utilizes calculation functions and writes new cases back. This communication is via a socket server. Cosmos also updates database tables of the system 1 directly. Official addresses, vehicle data, and credit scoring data is retrieved from various external databases via the service manager.

In more detail, and referring to Fig. 2 the class architecture of the system 1 is illustrated. The pages represent the view to the business object layer (also referred to as the "model") to the user. The user can perform actions, which are executed by the controller layer. If a user action affects the model, changes are sent to it (business object layer). In this environment, pages actually implement the code to handle user actions, and so events are not directly sent to the controller layer. The classes can be divided in the following categories:

| Class category | Description |
|---|---|
| Page | A page implements a certain Web page in the system application. It provides a view on the business object layer data, and allows the user to perform actions on that data. All pages follow the same global design pattern. It has a method to get information from the controller layer to display information, it has a method to send data entered by the user to the controller layer and it has calls to implement certain user actions and other functionality. |
| | A page uses helper objects, such as an InPage or an AFPage classes (from which it inherits always) and VisualUtil (to perform visual operations, such as filling a combo-box). |
| Controller | The controller layer consists of a number of controller classes and helper objects. It is responsible for coordinating the execution of a certain user action. For that, it will talk to the business object layer, external communication layer and helper objects. |
| | The controller layer hides the pages from the rest of the layer's implementation, which increases the maintainability. If the business layer or external communication layer implementation changes, the view layer (a.k.a. the pages will usually not be affected). |
| Business Object Layer | The business object layer is a set of objects, managed by the session object structure of NetDynamics™. The objects represent different aspects of car financing, such as case, customer, supplier, car, etc. |
| | Throughout the session of a user, data is submitted and retrieved from this layer. |
| | The layer also supports functionality for persistence: it is able to save a complete set of objects to the database, and to retrieve a full set of objects and rebuilt them in memory. |
| | Note that this persistence functionality has been implemented in Java, but is supported by Oracle™ stored procedures in the database. |
| External communication layer/External system wrapper | This layer consists of a number of objects that are able to talk to external systems. Basically, the objects serve as wrappers around these external systems, providing function oriented services (wrapper design pattern). |
| | Currently, this layer provides communication with SPAR (lookup person), BASUN (lookup company), UC (perform credit scoring) and Cosmos (a number of functions, please refer to the Cosmos API section). |
| Helper objects | The helper objects provide a large amount of services for the system framework. Please refer to the next section for a more detailed classification of helper objects. |

Regarding interaction of Java and NetDynamics™, since JavaScript is client-side it can generally be treated as HTML from a NetDynamics™ standpoint. That means JavaScript can be embedded in templates genereated dynamically. In most cases, JavaScript code is triggered by user interaction (pressing a button, clicking on a menu item etc.) or by the browser when a generated page has finished (the "onload" event). Such code is placed as attributes in the HTML tags. Where there is need for a bigger chunk of code, that code is placed in a separate function which is called from the event handler. An example:

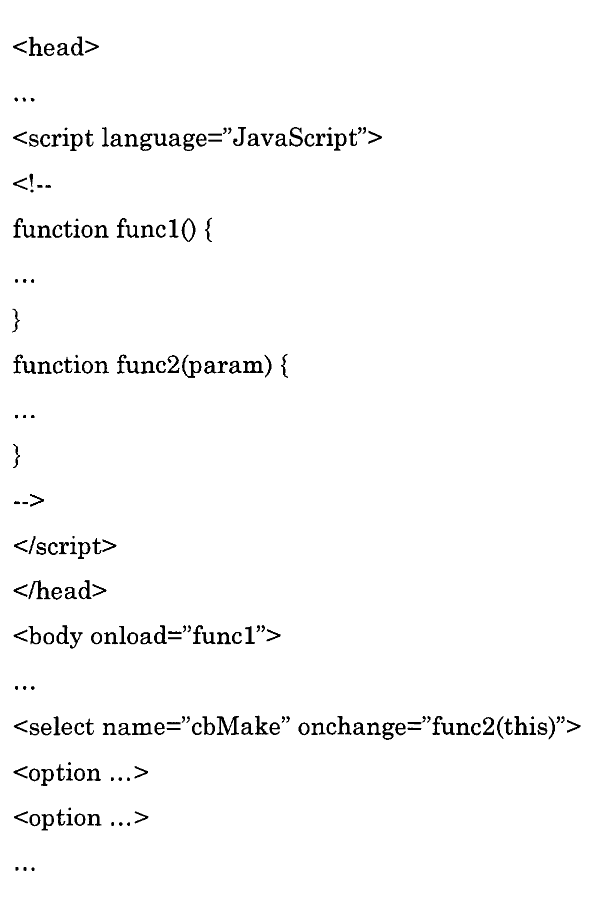

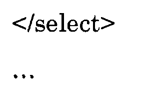

Here, "func1" is called when the page is loaded. This can be useful for initialising variables and structures, or displaying messages. "func2" is called when the user changes a selection in a drop-down list. The "onchange" attribute often must be genereated from NetDynamics™ code if the control is dynamically filled (from the database). In the template, the control only looks like this: "**cbMake**", so it can not be customised there. Neither can it be customised in the "user defined HTML" property in the NetDynamics Studio™, because that will genereate static values. The remaining alternative is to customise the HTML in the code, e.g. like this:

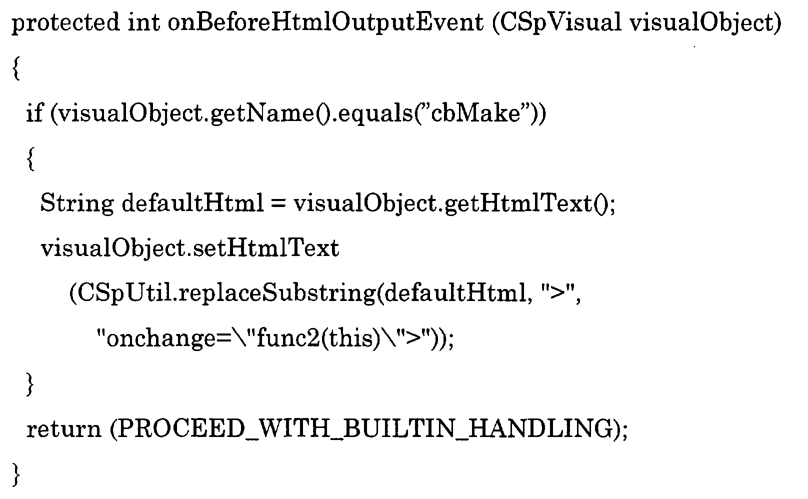

This approach also allows parameters to JavaScript functions to be generated dynamically from NetDynamics™.

If a function is only used in one page, the function is declared and defined directly in the template as shown above. If the function is used in more than one page, it is placed in a JavaScript source file which is included using:

### <script language="JavaScript" src="file name"></script>

This source file is automatically cached in the browser, so the performance penalty is not significant. Also, it reduces the size of each HTML page compared to including the code on each page, which should impact the performance in a positive way.

Regarding calling NetDynamics™ from JavaScript, JavaScript can also trigger loading pages from the NetDynamics™ server. It is relatively easy to just load a page without parameters. Submitting a form that triggers a NetDynamics™ event is slightly more difficult. When a form is submitted the normal way (user clicks a button), the name and value of the clicked button is sent as a name/value pair, so that the server can now which button was pressed. NetDynamics™ generates the NetDynamics™ event to call (normally "onbtnButtonName WebEvent") as the HTML name of the button. These two things combined is how NetDynamics™ picks up what event to call.

A form can be submitted from JavaScript with the "form.submit()" method. However, this will not send an event name and the standard load procedure in NetDynamics™ will be used. This can be circumvented by adding a dot plus the event name to the action of the form. An example:

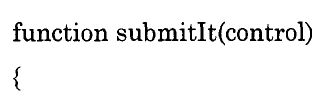

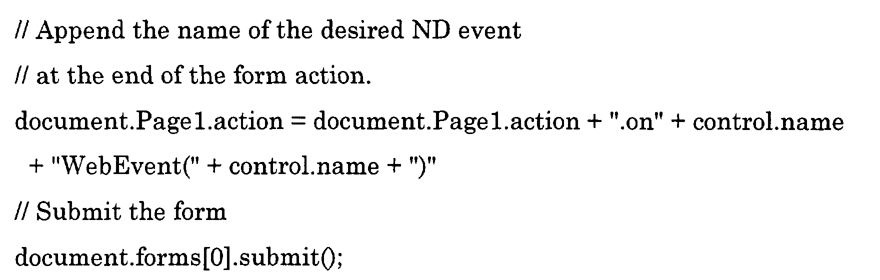

NetDynamics™ has built-in parallel capabilities. Each CP is capable of serving one user request at a given moment. By increasing the number of CPs, the average response time is shorter up to a certain limit. This limit exists because the CPs compete for CPU time, memory, disk I/O and network bandwidth. Consequently, the optimal number of parallel processes depends on the number of CPUs and memory in the server. Thus, adding more CPUs and memory to the machine running the application server allows scaleability. If adding more CPUs and memory is not enough, the system can be run on two or more servers. A request is automatically redirected to the server with the lowest load. This also has the additional benefit of better availability - if one server fails, the other (or others) can continue serving requests.

The following describes the functionality of the system 1.

For transaction processing, the key information related to a contract is Customer, Supplier, Object, and Calculation and an important function is credit scoring to allow automatic evaluation of a case to allow acceptance or rejection. The following functional matrix is a framework for the functionality description. The matrix divides the functions into groups, main functions, depicted in the leftmost column and the cells to right of the main function are functions within the group. For reference, each cell is identified with its co-ordinates in the matrix; A1, A2, etc.

| | Main function | 1 | 2 | 3 | 4 | 5 | 6 | 7 | 8 | 9 |
|---|---|---|---|---|---|---|---|---|---|---|
| A | Actors | Supplier | Corporate Custome | Private Customer | FM Customer | Invoice Address | Cobuyer | Guarantor | Driver | Actor model |
| B | Object | Leasing Object | HP Object | | Vehicle Database | | | | | |
| C | Calculation | Leasing calc. | HP calc. | | | | | | | |
| D | Credit Scoring | Credit Scoring | Manual approval | Credit Scoring Rules | | | | | | |
| E | Printing | Leasing print | HP print | | Statistic print | | | | | |
| F | Contract and Invoice | Invoice | Leasing and HP Contract | | Transfer to Cosmos | Formality Control | | | | |
| G | Search | Customer search | Customer search result | Supplier search | Supplier search Result | Case Search | Case search | | | |
| H | Fast Registration | Supplier | Customer | Object | Leasing calculation | HP calculation | Switch case- | | | |
| I | General | Login | Welcome | New case | Event log | Dialog, error and massage | Help | | | |
| J | Maintenance | Users | Vehicles | Headers & footers | Parameters | Synchronization | | | | |

The function groups A to J in the left-most column are implemented in the Business Objects Layer.

The actor model distinguishes between the actor and the roles it plays. One actor can play several roles; e.g. customer and supplier, but it is still the same actor. The actor is uniquely identified by the organization or personal number. This means that the actor model cannot have an organization or person stored with the same number several times. Actor attributes are:
Organization/personal number
Name
Roles currently supported are:
- Supplier,
- Customer,
- Co-buyer, and
- Guarantor.

An actor has one or more locations. An organization can for instance have several offices where it is located. All locations have the same organization number. As a minimum it has one location, its headquarters. A private person has only one location, his home address. All locations have one or more addresses. A location can for instance have several departments with their own invoice addresses and contact. As a minimum a location has one address; its main address. A private person's main address is his home address. He can have another invoice address as well. Address attributes are:
Address 1
Address2
Zip code
City

A contact is a person associated with a location. A location can have one or more contacts. The contact has a contact role such as main contact, sales person, employee, etc. Contact attributes are:
Name
Phone number 1
Phone number 2
Fax number
E-mail

- The actor model supports fetching addresses from the external databases. For example, when fetching the address from a particular database the following are applied:
- Organization legal types are not used.
- Even if the database provides multiple locations and addresses, the system only fetches the main location and official address of the organization.

The actor information is used by both the system 1 and the (external) Cosmos system. The respective databases are kept updated. In order to enable the synchronization, the following data ownership is defined.

The system 1 owns the actor as long as it is not yet sent to Cosmos. When it is sent to Cosmos it is thereafter owned by Cosmos. For example, a new customer is entered in the system 1. He signs the contract and the case is sent to Cosmos. He is now a current customer owned by Cosmos. Suppliers are always owned by Cosmos. One can only update the actor information as long as it is owned by the system 1. When it is owned by Cosmos one needs to use Cosmos to do updates. All actor updates done in Cosmos are immediately replicated to the actor database.

Regarding function group B, Object, in this embodiment the case object is the vehicle which will be financed. Selecting an object is mandatory for all cases.

A Leasing object page (B1) is used to specify the vehicle of a leasing case. The vehicle is uniquely identified by the registration number. One enters the registration number and presses the Fetch button. The vehicle information is now fetched from the external vehicle database. If the vehicle does not yet have a registration number the vehicle can be specified by selecting a parameter such as Make and the system automatically filters available Makes or models.

A Hire Purchase (HP) object page is used to specify the vehicle of a HP case. The vehicle is uniquely identified by the registration number. If the vehicle does not yet have a registration number the vehicle can be specified by selection, somewhat as described above.

The vehicle database is a repository inside the system with access methods. It supports the functionality of the other functions of the system. The Vehicle database consists of several logical modules including a models module, a tax data module, age data module, and a Cosmos module and a module of car prices.

The next function group is Calculation, C. This allows various calculations required for transactions to be performed. As shown in the table above, the particular functions implemented are Leasing, HP, calculations, HP consumer, and HP corporate.

On a calculation page one can calculate the monthly cost of the case. One can also do "what if' scenarios, changing one of the parameters and see how it affects the monthly cost. One other alternative is to do reverse calculation: given a fixed monthly cost what should for example the down payment be? In fact one can alter any of the parameters - calculating one of them. The page also include calculation of supplier commission and subvention. To take the example of the Leasing calculation, the parameters are:
1) Price of car
2) % Downpayment
3) Residual value
4) Interest rate
5) Monthly cost
6) Length of contract (in months)

For the next function group, Credit Scoring (D), the user simply presses a button and the overall result is displayed with credit-scoring result.

The credit scoring function is essential in the sales process. This function checks whether the customer is in a position to fulfill his or her obligations regarding the contract terms and if the object is correctly valued.

During credit scoring four modules evaluate the case:
1. The **financial situation** of the customer, and co-buyer, are tested using the scoring cards.
2. If it is a current customer, the customer ledger in Cosmos is used to verify the **payment history** of the customer.
3. The statistical value of the **object**.
4. The **calculation** and its parameters.

The result of the credit scoring shows if the customer passed, is rejected or if a manual approval is necessary.

When the case information is complete (supplier, customer, object, and calculation) and there is no valid credit scoring result is scored. Cases with a general agreement are always approved and do not need credit scoring. If the general agreement is removed from a case, the approval is set to invalid and the case needs to be scored.

The overall result of the scoring is displayed as a "traffic light":

| | |
|---|---|
| Red | application denied. |
| Yellow | manual approval required. |
| Green | application granted. |

The credit scoring result of each of the four modules are displayed with a description of the result. If any of the modules gives a negative result, the overall result is negative. The status of the scoring result (valid or invalid) is also displayed. If the credit scoring is invalid, it has to be manually approved.

The following describes the rules that are implemented for credit scoring. If any if the rules are violated the scoring result is set to yellow (manual approval required) if not explicitly specified otherwise.

### Financial situation module

The customer and co-buyer are evaluated.
- A general scoring card is applied
- The general credit policy of is applied

Mandatory data is:
- Personal/Organization number
- Yearly income (only private customer and co-buyer)
- Credit amount

The resulting Scoring points gives:

| | |
|---|---|
| 0 - 15 | Application denied |
| 16 - 20 | Manual approval required |
| 21 - 100 | Granted |

### Payment history module

The customer ledger in Cosmos is scanned:
- The customer cannot have one Collection code or a Collection date. This will yield status: Application denied
- The customer cannot have Reminder or more during the last two months
- The customer cannot have two Reminders or more during the last six months

### Object module

The object information is compared to the statistical value of the object (fetched from the vehicle database).
- The object must be defined in the Vehicle database.
- The object cannot have an Import flag.
- The object cannot have a "Black flag" registered by the lender.
- The maximum for car age (at the end of the contract) is 12 years
- The statically value is checked

The statistical value of the object is fetched from the vehicle database using the make/model/type/year and mileage of the object. The following rules are applied:
- If the mileage of the object is between two values in the database the lower mileage value is used.
- If the mileage of the object is outside the range in the database the closest value is used.
- If only one statistical value is available in the database, this value is used regardless of mileage.
- If the object is new, the new price is fetched.
- The statistical value fetched from the database is adjusted with a registered sum. Leasing: adjust the database price with 1 up before comparing the inserted price.
Hire Purchase: First check if the car is "young" or "old. The database price is adjusted down for young cars before comparing with the credit amount. An old car adjusts down before comparing with the credit amount.

### Calculation module

- Maximum credit amount allowed for a case are set for private persons and corporate categories.
- Maximum total credit amount is applied.
- Maximum Residual value in leasing cases are calculated according to duration.
- Maximum Residual value in hire purchase cases are calculated according to duration.

If the duration is between two values, the higher Residual value limit is used.

To give a manual approval one must have the associated privileges (or someone with those privileges can do the manual approval on your screen by specifying his or her user name and password) and press an Approve button. To reject a case one presses the Reject button. Everyone has the privileges to do that. The manual approval of a credit scoring must be within the approval limit of the user. The user has two personal limits, one for yellow light and one for red light. The limits can be 0.

The personal user limit is compared with the total engagement of the customer. The total engagement of the customer is:
**Total engagement** = Financed amount (in this case) + Engagement (from Cosmos) - Trade-in object remaining debt. Before approving a case one must enter a justification for the decision on the rows corresponding to the Credit Scoring result row which have a non-green result.

One can also specify any special conditions or other notes, regarding the approval/rejection.

A previous credit scoring result can be set invalid if certain information in the case is altered. The invalidation is different depending on the previous credit scoring result as set out in the table below.

| | **New Credit scoring result** | **Manual scoring result** |
|---|---|---|
| **Previous result is green** | Invalidated | - |
| **Previous result is not green, manual approval done** | Keep result (yellow or red) | Clear result |

The scoring result is set to invalid, according to the above table, if any of the following events occur:
1. The customer is changed
2. The financing type is changed
3. The customer yearly income is decreased
4. The co-buyer is changed
5. The co-buyer yearly income is decreased
6. The object make/model/type/object description or year is changed, import flag is set to Yes, or mileage increased.
7. The Credit amount is increased
8. The Contract duration is increased
9. The Residual value is changed.
10. A new trade-in object is selected.

The next function group is Printing, E. This is set up to allow operations such as printing a contract. The print documents are forms filled with information from the current case. When pressing the print button the documents are prepared in the background. Depending on the browser settings the documents are displayed in the browser or in a separate viewer. One can now choose which printer to use.

To take one example, a Leasing print page provides the possibility to print leasing case documents.
Available documents are:
- Contract template
- Contract with appendixes
   Guarantor page
   Order
   Delivery note
- Contract addendum

One can also select which page header/footer that should be used. Other printing functions are HP contract and repeat list.

The next function group is Contract and Invoice, F. This group allows entry of a supplier invoice, entry of contract information, transfer of the case to the Cosmos system, and formality control. The particular functions implemented are Invoice, Leasing and HP Contract, Transfer to Cosmos, and Formality Control.

The next function group is Search (G), in which there are four functions, Customer, Customer Result, Case, and Case Result. These functions allow searching under a number of specified attributes. The databases searched are the internal database and cosmos.

The function group Fast Registration (H) allows entry of a simple case requiring only key information. The functions implemented are Supplier, Customer, Object, Leasing Calculation, HP Calculation, and HP corporate buyer. The following describes operation of the Supplier and Customer functions.

### H1, Supplier

Select Supplier for the case using a unique key. Select the Supplier by entering supplier name or telephone number and press Search. If the search gives a unique result the supplier information is displayed, otherwise the Search Customer Result page is displayed. Or select a Supplier in the check-box, which contains favourite suppliers of a specific user and press.

Select supplier sales representative, applicable collaboration agreement and press Apply.

Features and limitations are as follows:
- If you need to search for a supplier, using other attributes than the name or telephone number, you need to go to the Supplier page.
- The agreement list is filtered based on the case type (leasing or hire purchase) and the current date (within the valid date interval of the different agreements).
- You must press Apply in order for the collaboration agreement to set values in the calculation.

### H2, Customer

Select Customer for the case using a unique key. Select Customer by entering the unique organization or personal number, and press Fetch. If it is an existing customer, the customer information is displayed. If it is a new customer, the name and address information is fetched from the external address databases for Organization numbers and Personal numbers respectively. If it is an existing customer the latest Credit Scoring date, the case number, and by whom, are displayed. Enter the customer annual income.

The general functions I are a number of pages and functions supporting the application, as follows.

### I1, Login

The login page is used to get access to the application. One must identify oneself with one's user name and password.

The following are some features and limitations:
- The user name, password and access rights must be previously registered.
- To get access to the external data sources the user name and password to these system must also be registered. Without these user names and passwords one cannot fetch addresses from the external databases and perform Credit Scoring.
- One cannot change access rights.
- One can change one's password.

### I2, Welcome

The Welcome page is the default page displayed when no case is selected. The Welcome page displays static information; text, images and buttons. The page provides information relating to campaigns or new functionality.

Features and limitations:
- The button Statistic print will only be shown for users that have access rights.
- The Welcome page is maintained using an HTML editor such as Microsoft FrontPage.

### I3, New Case

The New case page is used when creating a new case. When creating a case one selects:
Financing type:
   Leasing,
   Hire purchase consumer, or
   Hire purchase corporate.
Registration type:
   Fast, or
   Long (default)

After creating the case, this case is the current case.

Features and limitations:
- The selection sets which page is initially displayed for the case.
- The user selects the required collaboration deal which sets the interest rate and fees.

### I4, Event Log

The event log page displays all events recorder during the life cycle of the current case. The event attributes displayed are
- Date and time
- User
- Description

Features and limitations
- The event page is only displayed in the context of a case.
- The following events are recorded for Leasing and HP Cases
   Create case
   Credit scoring: Green
   Credit scoring: Yellow
   Credit scoring: Red
   Manual approval
   Manual rejection
   Send contract template
   Print contract with appendixes
   Update case: change customer
   Update case: customer income decreased
   Update case: customer general agreement removed
   Update case: change co-buyer
   Update case: co-buyer income decreased
   Update case: vehicle make changed
   Update case: vehicle model changed
   Update case: vehicle type changed
   Update case: vehicle year changed
   Update case: vehicle mileage increased
   Update case: vehicle direct import changed to Yes
   Update case: credit amount increased
   Update case: contract duration increased
   Update case: final payment increased
   Print contract addendum
   Contract arrival registration
   Invoice registration
   Transfer to Cosmos
   Transfer and start in Cosmos
   Financing type changed
   Object description changed
   Formality control performed
- One cannot manually record one's own events.

### I5, Dialog, Error and Message

In situations where one gets a message or need to confirm an action a message page is used. The message page gives information, validation, or error messages. When one has read the message one presses the Back button to get back to the previous page.

### Confirmation: In some situations one needs to confirm a choice.

Validation: When input validation rules are violated one gets a message describing the expected input.

Recoverable error: Errors from which one can recover, for example, when a selected customer isn't found in the database, are described by an error message. One also gets a description of the required action.

Fatal error: Errors from which one cannot recover, e.g. application internal errors, are described by a standard message asking the user to contact the Helpdesk. The application internal codes are written to an internal system log file for the system administrator to use in his analysis of the error. One is now logged off the application and needs to log in again. A Login again button is available.

### I6, FAQ (Frequently Asked Questions

The Help application provides on-line help. A Help button on the menu launches the help application.

### J, Maintenance

The data maintenance application allows one to add and modify key system data.

The maintenance application is intended for the expert system administrator.

### J1, Users

The User option lets one add and modify users. User information includes:
- User name
- Full name
- Signature
- System password
- External systems user name and password
- Manual approval limit (for internal users only)

Features and limitations:
- One cannot delete a user.
- The user must also get a valid user name and password in order to log in.
- There are two manual approval limits; one limit for manually approving a yellow credit scoring result, and one for manually approving a red credit scoring result.
- The manual approval limits can be zero.

### J2, Vehicles

The Vehicle option allows one to update the Vehicle database. The vehicle database information one can modify includes:
- Make
- Model
- Type
- Statistical prices
- CBR code
- Cosmos object codes
- RSV code and price
- Credit Scoring information

Features and limitations:
- One cannot delete Vehicle information.
- To maintain referential integrity of the vehicle database, the links between make/model/type/CBR code/Cosmos object codes/RSV code and price, must be kept.

### J3, Headers & Footers

The Header & footer option allows one add and modify report header & footer information. The header and footer information covers:
- Private label
- Header logo image
- Footer information

Features and limitation
- The image must fit within the reserved report area.
- Image size and resolution have an impact on report generation performance.

### Parameters

The Parameter option allows one to modify the system parameters. You can add and change the value of the parameters within the following areas:
- Internal constants
- Credit Scoring limits
- External communication parameters

Features and limitations:
- Modifying the parameters can have a serious impact on system functionality.
- The parameters are static which means that one can modify them at runtime, but the new values will not be used until the application server is restarted.

### J5, Synchronization

Some information in the database is maintained in Cosmos. When updates are done in Cosmos these are replicated to the internal database. The replication is implemented in Cosmos. It is automatically performed when updates are done in Cosmos. Replicated information covers:
- Customers (current)
- General agreements
- Suppliers
- Supplier sales persons
- Collaboration agreements
- Template agreements.
- Employees
- Miscellaneous code tables

When a case is transferred to Cosmos, the assigned contract id is replicated to the system 1 using the same mechanism.

The table below is a functionality matrix with emphasis on the external functionality seen by external users. The functional matrix is a framework for the functionality description. The matrix divides the functions into groups, main functions, depicted in the leftmost column. The cells to right of the main function, are functions within the group.

Each cell is described in the remaining document. For reference each cell is identified with its coordinates in the matrix; A1, A2, etc.

| | Main function | 1 | 2 | 3 | 4 | 5 | 6 | 7 | 8 | 9 |
|---|---|---|---|---|---|---|---|---|---|---|
| A | Case pages | Private HP Fast | Private HP Full | Private HP Show | Corporate HP Fast | Corporate HP Full | Corporate HP Show | Corporate Leasig Fast | Corporate Leasing Full | Corporate Leasing Show |
| B | Case related pages | Show Agreements | Event Log | Print Offer | Print Contract | Print Confirmation | Search and Get Case | Cancel Case | | |
| C | General pages | Login | Welcome | Change Password | Print Wait Page | Repeat List | Site Closed Notification | | | |
| D | Text Information pages | Text Information Mechanism | Products and Services | Recomm ended Values | Sales Contests and Campaigns | Useful Links | Contact List | Questions & Answers | Legal information | Site Map |
| E | Main | Apply | Lookup | Perform | Perform | Repea | General | | | |
| | Functionality | Agreement | Vehicle | Calculat ion | Credit Scoring | t List Mechanism | Web Functionality | | | |
| F | Reports | Offer | Contract | Confirmation | | | | | | |

The following are general comments on the functionality.
- Users access the application through a browser. The first web page they will need to load is the login page. After login, the welcome page is displayed.
- Users can choose three main actions when using the application:
   - To create a financing case (e.g. basis for financing deal)
   - To save a financing case, and to retrieve a case
   - To access information pages
- Users can work with three types of cases:
   - Hire Purchase for private customers
   - Hire Purchase for corporate customers
   - Leasing for corporate customers
- When a user chooses to create a financing case, the following flow of actions is typically taken:
   - The user requests to creates a certain case type
   - A "Fast" page is opened for the specific case type.
   - The user can use this page to enter and retrieve information needed for the case
   - If needed, the user can open the "Full" page, which provides additional features and data that the user can specify for the case
   - When done with data entering, the user can generate offert reports and can request that the case is credit scored
- Credit scoring of a case will check all case data, and then, according to business rules, perform a credit scoring. The result of the credit scoring is shown on a so-called "show page", a page that includes all relevant case information and the current case status.
- Credit scoring can result in an "OK" or "Not yet OK". If the result was "OK", the user can continue with the case, printing contracts and confirmations. No data in the case can be changed anymore.
- If the credit scoring result was "Not yet OK", the car dealer sales person can cancel the case, or can call the lender to get a manual approval. During the call, the case can be opened, using the system intranet functionality, to decide if the case can be accepted. When a decision is made, the case is saved, and the car dealer can reload the case.
- After reloading, again a show page is shown, but now with the decision: accepted or rejected.

### A, Case Pages

The case pages provide users with the possibility to enter financing cases, and use the main functionality around cases, such as applying agreements, searching for customers and other types of actors in cases, looking up vehicles, performing calculations and credit scoring cases.

### A1, Private HP Fast

A private HP Fast page is used to enter in a quick way case information for a Hire Purchase case for a private customer.

The private HP case is used in the following way:
- The user can select an agreement. The agreements shown are agreements for Hire Purchase, for the car dealer that the user is working for.
- By entering a personal number, the users can lookup customer information. Customer information is retrieved from the internal database, or, if the customer could not be found, in the SPAR database (government system). Data that is looked up is name, address, zipcode, city and phone number. The user will need to enter a yearly income specification.
- The user can also lookup a person that will act as co-buyer. Personal information of the person is looked up from the internal database or SPAR. Only the name is displayed. Yearly income needs to be entered as well.
- The user can specify a car in two ways: if the user knows the registration number and model year of the car, the car information can be retrieved from the vehicle database. Otherwise, the user needs to specify the car information. Car information includes: new/used car, direct import or local car, mileage (in kilometer), registration nr, model year, make, model, type. The user is also able to enter a free-text delivery indication (such as "first quarter 99" or a specific date).
- The user can perform hire purchase calculations. The following is possible:
   - The user needs to enter the period of the hire purchase (in months)
   - The user needs to enter at least 4 of the following items: the price, the down payment, the final payment, the interest and the monthly fee. One of the factors can be calculated.
   - The user is able to specify downpayment and final payment as a percentage of the price of the car. The system will calculate the amount in SEK.
- While calculating, the system will also calculate affective interest, the subvention and commission amount. The system will show the agreement based invoice and administration fee.
- The user can print offers.
- The user can save the case for later retrieval.
- The user can use navigation to other pages
- The user can navigate to the "Full" page, if additional functionality or data is required
- All data that the user enters will be validated. Validation errors will be displayed if needed.

### A2, Private HP Full

The private HP full page is used in case a user wants to enter a hire purchase case for a private customer, and the user needs to specify more data that in the fast page. The full page offers the same functionality as the fast page, but in addition supports the user with the following features:
- Specify and show additional information for the customer: payment method (bank or giro), email address and alternative invoice address
- Specify and show additional information for the co-buyer: address information, phone number, email, and the percentage that the co-buyer will pay (otherwise 50% default)
- Ability to lookup and specify a guarantor (name, address, phone number and email address). Lookup will be using the system database and the SPAR system.
- Ability to specify extras for the vehicle. The user can select pre-defined extras or can type and then add the free text item.

### A3, Private HP Show

The private HP Show page is used to display read-only information about a Hire Purchase case of a Private customer. The show page is used when a certain case has certain statusses. As soon as the case has been credit scored, from that moment on, when opening the case, it will show a "show page".
The show page displays many read only details of the case. The main elements are:
- The case credit scoring status
- General case information

The credit scoring status is shown as a sentence on top of the screen, informing the user if:
- The case was accepted (Credit was approved, either automatically or manually)
- The case needs approval (this happens if the case was scored and gave a yellow or red result, or if the case was scored and later the scoring was made invalid)
- The case was denied (e.g. credit was not approved)

Dependent on the status, the user is able to generate certain reports, such as contract, confirmation and offers.

### A4, Corporate HP Fast

A corporate HP Fast page is used to enter in a quick way case information for a Hire Purchase case for a corporate customer.

The corporate HP case is used in the following way:
- The user can select an agreement. The agreements shown are agreements for Hire Purchase, for the car dealer that the user is working for.
- By entering an organization number, the users can lookup customer information. Customer information is retrieved from the internal database, or, if the customer could not be found, in a government system. Data that is looked up is name, address, zipcode, city, phone and fax number.
- The user can specify a car in two ways: if the user knows the registration number and model year of the car, the car information can be retrieved from the vehicle database. Otherwise, the user needs to specify the car information. Car information includes: new/used car, direct import or local car, mileage (in kilometer), registration nr, model year, make, model, type. The user is also able to enter a free-text delivery indication (such as "first quarter 99" or a specific date).
- The user can perform hire purchase calculations. The following is possible:
   - The user needs to enter the period of the hire purchase (in months)
   - The user needs to enter at least 4 of the following items: the price, the down payment, the final payment, the interest and the monthly fee. One of the factors can be calculated.
   - The user is able to specify downpayment and final payment as a percentage of the price of the car.
- While calculating, the system will also calculate affective interest, the subvention and commission amount. The system will show the agreement based invoice and administration fee.
- The user can print offers.
- The user can save the case for later retrieval.
- The user can use navigation to other pages
- The user can navigate to the "Full" page, if additional functionality or data is required
- All data that the user enters will be validated. Validation errors will be displayed if needed.

### A5, Corporate HP Full

The corporate HP full page is used in case a user wants to enter a hire purchase case for a corporate customer, and the user needs to specify more data that in the fast page. The full page offers the same functionality as the fast page, but in addition supports the user with the following features:
- Specify and show additional information for the customer: email address, contact person name, payment method (bank/giro) and alternative invoice address
- Lookup and specify data for up to two guarantors (person number, name, address, phone number, email address)
- Ability to specify extras for the vehicle. The user can select pre-defined extras or can type and then add the free text item.

### A6, Corporate HP Show

The corporate HP Show page is used to display read-only information about a Hire Purchase case of a corporate customer. The show page is used when a certain case has certain statusses. As soon as the case has been credit scored, from that moment on, when opening the case, it will show a "show page".
The show page displays many read only details of the case. The main elements are:
- The case credit scoring status
- General case information

The credit scoring status is shown as a sentence on top of the screen, informing the user if:
- The case was accepted (Credit was approved, either automatically or manually)
- The case needs approval (this happens if the case was scored and gave a yellow or red result, or if the case was scored and later the scoring was made invalid)
- The case was denied (e.g. credit was not approved)

Dependent on the status, the user is able to generate certain reports, such as contract, confirmation and offert.

### B, Case Related Pages

Case related pages offer various functionality features, for example to manipulate cases, or to get additional information.

### B1, Show Agreements

The user can navigate to the show agreements page, to be informed on the applicable agreements between the company and the car dealer for which the user works for.

If the user has a case open, the show agreements page will show only those agreements that match the type of the case (Hire purchase, Leasing).

Information that is shown read-only, is:
- Description of the agreement
- Type of agreement
- Interest moveability ― fixed or moving
- Administration fee for opening the contract, e.g. to be paid the first time
- Invoice fee, the periodic fee for handling the contract
- Valid to - date

### B2, Event Log

The user can navigate to the event log, to see what has happened to the case since it was created. Clicking on the "Log" button on the case pages will navigate the user to the event log page.
Different types of events are tracked, and shown read-only on this page, in the order of time. The user can see:
- Date/time of the event
- An description of the event
- A sentence addition to make clear which events were done by the lender.

### B3, Print Offer

The user can navigate to the print offer page, to initiate the "offer" generation. The user is able to navigate to this page, by using the "Offer" button on the case pages.
The user will need to specify:
- A date that limits the validity period of the offert
- An optional additional free text that will be displayed on the offert

The user can then click "print". The "Offer" report that will be generated and send to the Browser, is in a "PDF" format. The user will need a PDF viewer installed on the PC he or she is working with.

### B4, Print Contract

The user can navigate to the print contract page, to initiate the "contract" generation. The user is able to navigate to this page, by using the "Contract" button on the case pages.
The user will need to specify a delivery date for the vehicle.

The user can then click "print". The "contract" report that will be generated and send to the Browser, is in a PDF format.

### B5, Print Confirmation

The user can navigate to the print confirmation page, to initiate the "confirmation" generation. The user is able to navigate to this page.
The user will need to specify a delivery date for the vehicle.

The user can then click "print". The "confirmation" report that will be generated and send to the Browser, is in a "PDF" format.

### B6, Search and Get Case

Users can use the "Search and Get Case page" to lookup cases, and select one. Searching can be done based on the following criteria:
- Cases created by the user, or all cases for the supplier the user works for
- Ongoing cases, cases that have been closed (e.g. sent to Cosmos) or all cases
- Cases created in the last 7 days, last 30 days, or last 365 days
- Case with a certain case id
- Case with a customer with a certain name. Search in a name is done with a "BEGINS WITH" clause, and is case insensitive
- Cases with a vehicle with a certain registration number

Search results are shown after the user has pressed "Search". The search results are shown in a table with the following columns:
- Case number
- Name of the customer
- Phone number of the customer
- Description of the car (make, model, type, model year)
- Registration number of the car
- Status of the case
- Create data
- Name of the user who created the case

If no search results were found, a message is displayed.

When the search results are shown, the user can do the following:
- Open the case, to view or change data
- Request to cancel the case (for open cases only)

### B7, Cancel Case

If the user has requested on the search page, to cancel the case, the user will be brought to this page. In this page, the user can confirm the cancelation of the specific case. The user will need to select a reason why the case did not lead to any business.

### C, General Pages

General pages allow users to use non-case related functionality.

### C1, Login

The login page is the first page that a user needs to access before he or she can use any systems functionality. A user name and password need to be specified. The system will check that:
- The username and password are correct
- The user is not de-activated
- The user has access rights to the application

Note that opening the Login page through the internet, can only be done using SSL. SSL is a security mechanism, that authenticates the server and encrypts communication between user and lender systems. This means:
- Other companies can not "mimic" the system server
- Data is sent encrypted over the Internet, and can not be viewed

On the Login page, a number of other links to information pages has been provided.

Note that, in addition, the system will check the Browser version as much as possible, and will give a warning message, if the browser is not supported by the system.

### C2, Welcome

The welcome page is the first page that the user will see after login in. It provides the user with a welcome message/graphic, a menu of options, and 4 fast buttons.
The menu allows the user to navigate to other pages and to logout.
The four fast buttons can be used to:
- Create and start working with a private hire purchase case
- Create and start working with a corporate leasing case
- Create and start working with a corporate hire purchase case

### C3, Change Passwords

The Change Password page can be used by the user to change his or her password. The user will need to enter his or her current password, and twice the new password.

### C4, Print Wait Page

The print wait page is a page that is only displayed for a short time, during which the system is busy generating any of the report prints (offer, contract, confirmation).

### C5, Repeat List

Car dealers can use the repeat list page to download a copy of two possible reports:
- Repeat list
- Customer card list

These two reports help car dealers to contact customers for who the contract is about to expire. This means that the customer is about to buy and/or finance a new car, which is potential new business for the car dealer.
Both reports contain customer and contract details for customers with a contract that is either expiring within a month's period, or in the month's period 3 month's from now.
The repeat list contains an overview of the contracts. The customer card contains per page a more detailed overview of the customer and his or her contract.

### C6, Site Closed Notification

The following factors impact on downtime:
- Nightly backups
- Periods in which Cosmos in not available (certain jobs, software upgrades)
- Software upgrades
- Errors, for instance network, or hardware failures

When the system is down, and a user attempt to access it, the user will be informed that the system is not available with a notification web page.

### D, Text Information Pages

The text information mechanism provides the possibility to inform end-users of the application with specific targeted information. A number of separate pages and content have been defined.

### D1, Text Information Mechanism

The text information mechanism is a set of system components that allow to show HTML on a number of pages. The HTML files need to be created, and installed on the application server. Then, using the admin tool, users can define the HTML files (e.g. define the content) in the system and then target the content to certain pages, and users. The following targeting rules exist:
- On what page should the html be shown?
- To what users should the html be shown:
   - All users
   - Users working for a certain car dealer
   - Users working for car dealer (s) in a certain group
- Does the content has the status "Published"
- Does the target rule has the status "Published"
- Does the current date fall in the content and target rule validity period

### D2, Products and Services

This page shows information about the products and services that the lender offers to their customers and partners.

### D3, Recommended Values

This page shows information to the users about recommended values. This covers recommended downpayment percentages, final payment percentages and credit periods, dependent on the age of the car, for different case types.

### D4, Sales Contests and Campaigns

This page shows information on different sales contests and campaigns that the lender has.

### D5, Useful Links

This page shows useful links for car dealers. This is convenient, since many questions that car dealers have, could be answered by navigating to these sites. This includes sites such as Government tax rules for cars, other tools, etc.

### D6, Contact List

The contact list page shows address, email phone and fax information for each of the locations as well as some general information about the lender.

### D7, Questions & Answers

Questions and Answers is a page, that contains information on frequently asked questions.

### D8, Legal Information

The legal information page shows legal rules, constraints and other information that applies when a car dealer uses the system.

### D9, Site Map

The Site Map page shows a high level process and screen overview of a typical case flow through the system. It helps users to understand the common flow of a case.

### E, Main Functionality

This section describes the main large functionality items that users can use when working with the car dealer extranet module.

### E1, Apply Agreement

Car dealers close agreements with the lender. An agreement specifies the details of a contract (e.g. what interest table to use, what fee's apply). The "apply agreement" functionality is triggered if the user selects an agreement in one of the fast or full pages. The functionality needs to be performed before any calculations can be done.

### E2, Lookup Vehicle

"Lookup Vehicle" provides functionality that allow a user to lookup a vehicle, by specifying registration number and model year.
First a lookup will be done in the local copy of the government register of cars. If the car was not found, an online connection is made to the government car register CBR, and a search attempt is done there.
If the information is found, it is then used to gather vehicle information, which includes a mapping to a vehicle type database.

### E3, Perform Calculation

The system offers different types of calculations:
- For different case types (leasing, hire purchase)
- With different side parameters (what interest table, what base date, what type of financing, amortization/annuity, periodic payment before or after each period, etc)
- To calculate different factors (price, interest rate, periodic payment amount)

### E4, Perform Credit Scoring

This is described in detail above.

### E5, Repeat List Mechanism

Every month, the system allows users to download two types of reports:
- Repeat list
- Customer cards

### E6, General Web Functionality

The system Web interface consists of a number of functionality features, that are specified here on a high level:
- The application supports most available browsers.
- The application runs using SSL, for security reasons
- The application uses DHTML
- The user interface uses the following features:
   - A graphical menu structure, with pull down menus
   - A logo. The logo of the car dealer is shown.
   - A "sticky menu item" showing the current active page (implemented for all pages, except text information pages)
   - Graphical and text buttons to initiate actions
   - Automatic submits, e.g. when a user enters data, and tries any action, the data he enters will be submitted, validated and stored
   - Certain browser side functionality has been built to perform local functionality, or to contact the server and execute functionality there (agreements, vehicle types, extras)
   - Area separators ("Kund", "Bil") show additional information, when the mouse is moved over the area, for the full and fast pages.
   - Simple messages and errors are shown as a separate dialog pop-up window.
   - A case status bar is shown always, specifying the name of the current user, and the case number of the current case (if a case is opened, and has been saved at least one time)
- In addition, a number of data handling features are supported:
   - Formatting and validation of personal and organization numbers - these numbers are displayed as XXXXXX-XXXX, where X is a number from 0 - 9. The user can enter the dash ("-"), or can decide to skip it.
   - Formatting of numbers. Users are able to enter numbers with 1000 separators Space (" ") or Period (".") On the fast and full pages, the system shows numbers without the separators. On the show pages, 1000 separators are show, using period (".")
   - All data in data entry pages is validated when the data is needed for an action. If one or more validation errors are found, the page is show again, with on top, a table with the fields with validation errors, and per field a short description of the error. This allows the user to fix the error. Note that the user will not be able to perform any action, until the user has fixed the errors.
- Error handling has been implemented on 2 levels:
   - When a user error or recoverable system error occurs, a simple dialog is shown, informing the user about the error and recommending an action
   - When a severe, unrecoverable system error occurs, the user is logged out, and all his data is lost. This assures the internal consistency of the system.

### F, Reports

The system extranet module allows users to generate and print various reports. Most of these reports have been described in detail in the intranet module functionality. The Offert report however, is only accessible for car dealers via the extranet module.

### F1, Offer

The Offer is a document that can be generated by the car dealers only. The report can be used to give an end-customer a proposal for a car.

This document has all important information about the proposal, and is branded with the logo and name/address information of the car dealer and sales person.
Different offer contents have been defined for leasing, corporate HP and private HP. In addition, if the restvalue is higher than zero, some more rules apply.

### F2, Contract

The contract is the formal document, that the customer needs to sign to close the financing deal. Different contract layouts and appendices have been implemented, based on case settings (such as case type, customer type, existence of guarantor and co-buyer).

### F3, Confirmation

The confirmation is a document, that contains a summary of the case data, to confirm the case.

The invention is not limited to the embodiments described but may be varied in construction and detail. For example, it is envisaged that a system architecture other than that described (generated using the NetDynamics™ tool) may be used. Any architecture which provides the functionality described could be used.

For completeness, various aspects of the invention are set out in the following numbered clauses:-
1. A transaction processing system comprising:-
   an access server comprising means for interacting with user systems, and
   an application server connected to the access server and comprising means for retrieving data for a transaction and for directing it to a user system via the access server.
2. A transaction processing system as defined in clause 1, wherein the access server comprises a plurality of connection clients, each comprising means for handling a transaction request.
3. A system as defined in clauses 1 or 2, wherein the application server comprises a connection processor comprising means for dynamically generating a transaction report for a user.
4. A system as defined in clause 3, wherein the connection processor comprises means for dynamically generating a HTML page for transmission to a user via the access server.
5. A system as defined in clause 4, wherein the connection processor comprises a Java Virtual Machine™ architecture.
6. A system as defined in clauses 4 or 5, wherein there are a plurality of connection processors residing on one or more hardware platforms.
7. A system as defined in any preceding clause, wherein the application server comprises a data server comprising means for accessing external databases to retrieve data for use in processing a transaction request.
8. A system as defined in clause 7, wherein the data server comprises means for establishing a link with a service manager comprising means for retrieving data from a plurality of external databases.
9. A system as defined in any preceding clause, wherein the application server comprises a persistence engine comprising means for maintaining current session data.
10. A system as defined in clause 9, wherein the application server comprises a configuration utility comprising means for setting parameters for maintenance of session data by the persistence engine.
11. A system as defined in clauses 9 or 10, wherein the connection processor comprises means for accessing the persistence engine to determine session data upon receipt of a transaction request.
12. A system as defined in any preceding clause, wherein the application server comprises means for accessing a request broker queue maintained by connection clients of the access server.
13. A system as defined in any preceding clause, wherein the data server comprises means for retrieving requests from a request broker queue.
14. A system as defined in any preceding clause, wherein the application server comprises business functions for retrieving and processing data for users.
15. A system as defined in clause 14, wherein the application server comprises a class architecture comprising a business object layer, pages which represent views to the business object layer, and a controller layer comprising controller and helper objects.
16. A system as defined in clause 15, wherein the business object layer comprises a set of objects instantiated from classes for functions.
17. A system as defined in clauses 15 or 16, wherein the page implements a particular Web page and comprises a method to obtain information from the controller layer, a method to send data entered by the user to the controller layer, and a method to implement certain user actions.
18. A system as defined in any of clauses 15 to 17, the controller layer classes and helper objects co-ordinate execution of user actions and communicate with the business object layer.
19. A system as defined in any of clauses 15 to 18, wherein the business object layer classes include an actor class to implement an actor function group or model.
20. A system as defined in clause 19, wherein an actor model allows instantiation of an object to perform one of several roles.
21. A system as defined in clause 20, wherein an actor may have multiple location attributes.
22. A system as defined in clause 21, wherein the application server comprises means for allowing access of an external system to an actor and an actor is owned by the system upon which it currently resides.
23. A system as defined in any of clauses 15 to 22, wherein the business object classes include an object class for instantiation of objects such as leasing or hire purchase objects.
24. A system as defined in any of clauses 15 to 23, wherein the business object layer includes a calculation class for instantiation of calculation functions.
25. A system as defined in clauses 15 to 24, wherein the business object layer classes includes a credit scoring class for instantiation of a credit scoring function using data retrieved via a data server on the application server.
26. A system as defined in clause 25, wherein the credit scoring function comprises means for analysing inputted credit-related data, data retrieved from an internal object database, and payment history data retrieved from an external database.
27. A system as defined in clause 26, wherein the credit scoring function comprises means for analysing calculated data such as purchased item residual value.
28. A system as defined in any of clauses 25 to 27, wherein the credit scoring function comprises means for generating an acceptance response, a rejection response, or a response asking for manual approval.
29. A system as defined in clauses 15 to 25, wherein the business object layer classes include printing, contract, search, fast registration, general, and maintenance classes.
30. A system substantially as described herein with reference to the drawings.
31. A transaction processing method carried out by a system comprising an access server and a server, the method comprising the steps of:-
   the server automatically accessing a database to determine credit data of a customer applying for a loan, and
   the server generating an output indicating approval or rejection of the application.
32. A method as defined in clause 31, wherein the server accesses an external database to determine the credit data.
33. A method as defined in clause 31 or 32, wherein the output is a credit scoring result.
34. A method as defined in clause 32, wherein the result is an acceptance, a rejection, or a manual approval requirement.
35. A method of operation of a transaction processing system substantially as described herein with reference to the drawings.

## Claims

1. A transaction processing system comprising:-
an access server comprising means for interacting with user systems, and
an application server connected to the access server and comprising means for retrieving data for a transaction and for directing it to a user system via the access server.

2. A transaction processing system as claimed in claim 1, wherein the access server comprises a plurality of connection clients, each comprising means for handling a transaction request.

3. A system as claimed in claims 1 or 2, wherein the application server comprises a connection processor comprising means for dynamically generating a transaction report for a user.

4. A system as claimed in any preceding claim, wherein the application server comprises a data server comprising means for accessing external databases to retrieve data for use in processing a transaction request.

5. A system as claimed in any preceding claim, wherein the application server comprises a persistence engine comprising means for maintaining current session data.

6. A system as claimed in claim 5, wherein the application server comprises a configuration utility comprising means for setting parameters for maintenance of session data by the persistence engine.

7. A system as claimed in any preceding claim, wherein the application server comprises means for accessing a request broker queue maintained by connection clients of the access server.

8. A system as claimed in any preceding claim, wherein the data server comprises means for retrieving requests from a request broker queue.

9. A system as claimed in any preceding claim, wherein the application server comprises business functions for retrieving and processing data for users.

10. A transaction processing method carried out by a system comprising an access server and a server, the method comprising the steps of:-
the server automatically accessing a database to determine credit data of a customer applying for a loan, and
the server generating an output indicating approval or rejection of the application.
